# EUROPÄISCHE PATENTANMELDUNG

(11) **EP 4 494 442 A1**
(43) Veröffentlichungstag der Anmeldung: **22.01.2025**
(21) Anmeldenummer: 24171001.1
(22) Anmeldetag: 18.04.2024
(51) Int. Cl.: A01D 45/02

(54) **ERNTEVORSATZ**

(30) Priorität: 07.06.2023 DE 102023114929
(71) Anmelder: CLAAS Selbstfahrende Erntemaschinen GmbH, 33428 Harsewinkel (DE)
(72) Erfinder: Lütke Harmann, Tim, 48324 Sendenhorst (DE); Herter, Felix, 33428 Harsewinkel (DE); Aerdker, Bernhard, 48231 Warendorf (DE); Terörde, Stefan, 48231 Warendorf (DE)
(74) Vertreter: CLAAS 365FarmNet GmbH

(57) **Zusammenfassung**

Ein Erntevorsatz, insbesondere für die Ernte von Halmfrüchten, umfasst wenigstens einen in einer Fahrtrichtung der Erntemaschine (1) langgestreckten Einzugsspalt (14). Ein Paar von Pflückwalzen (7; 7l, 7r) bildet einen sich entlang des Einzugsspalts (14) erstreckenden Klemmspalt (39) und ist drehangetrieben, um einen in dem Klemmspalt (39) geklemmten Halm durch den Einzugsspalt (14) quer zu dessen Längsrichtung hindurchzuziehen. Jede Pflückwalze (7; 7l, 7r) des Paars weist eine Mehrzahl von an ihrem Umfang verteilten Mitnehmerrippen (36) auf. Wenigstens eine erste der Mitnehmerrippen (36) weist einen gezahnten ersten Abschnitt (37) und einen als durchgehende Schneidkante ausgebildeten zweiten Abschnitt (38) auf.

## Beschreibung

Die vorliegende Erfindung betrifft einen Erntevorsatz, insbesondere für die Ernte von Halmfrüchten, typischerweise Mais, mit wenigstens einem Einzugsspalt, der in einer Fahrtrichtung der Erntemaschine langgestreckt ist, so dass Halme von einem vorderen Ende des Einzugsspalts her in diesen eingeführt werden können, und einem Paar von Pflückwalzen, das einen sich entlang des Einzugsspalts erstreckenden Klemmspalt bildet und drehangetrieben ist, um einen in dem Klemmspalt geklemmten Halm durch den Einzugsspalt quer zu dessen Längsrichtung hindurchzuziehen, und dabei Früchte von dem Halm abzustreifen. Um die Zugkraft zu erhöhen, die die Pflückwalzen auf den Halm ausüben können, ist es gebräuchlich, dass jede Pflückwalze des Paars eine Mehrzahl von an ihrem Umfang verteilten Mitnehmerrippen aufweist; indem Wälzkreise von Mitnehmerrippen der beiden Pflückwalzen einander überschneiden, kann ein Halm in Kontakt mit den Mitnehmerrippen geknickt werden, was die übertragbare Zugkraft im Vergleich zu einem lediglich geklemmten, den Klemmspalt geradlinig durchlaufenden Halm erheblich erhöht. Außerdem kann das Knicken zu einer Zerkleinerung des Halms beitragen. Eine gründliche Zerkleinerung ist wichtig, damit abgestreifte und wieder auf dem Feld abgelegte Halmbestandteile Fruchtschädlingen wie etwa dem Maiszünsler nicht als Unterschlupf zur Überwinterung dienen können.

Aus EP 1 207 737 B1 ist ein Erntevorsatz bekannt, bei dem überlappende Mitnehmerrippen der sich gegenüberliegenden Pflückwalzen den Halm nicht nur knicken, sondern gleichzeitig zwischen einander gegenüberliegenden Flanken der Mitnehmerrippen quetschen, wodurch im Idealfall der Halm nicht nur in Längsrichtung, sondern auch im Querschnitt zerkleinert wird. Zum Quetschen der Halme ist jedoch ein hoher Kraftaufwand erforderlich, und dementsprechend hoch ist der Kraftstoffverbrauch beim Betrieb dieses Erntevorsatzes.

DE 198 52 695 A1 beschreibt einen Erntevorsatz sich beiderseits eines Klemmspalts gegenüberliegenden Pflückwalzen, deren von entgegengesetzten Seiten her in den Klemmspalt eingreifende Mitnehmerrippen einen Halm beim Hindurchziehen vielfach knicken, aber im Wesentlichen zusammenhängend belassen, und ein Unterflurhäcksler unter dem Klemmspalt angeordnet ist, um den geknickten Halm zu zerkleinern. Hier wird der Halm zwar in Längsrichtung zuverlässig zerkleinert, der Querschnitt der Halmabschnitte bleibt aber im Wesentlichen intakt. Um die zur Unterdrückung von Schädlingen nötige feine Häckselung zu erreichen, insbesondere bei kräftigen, bodennahen Halmabschnitten, ist deshalb niedrige Schnittlänge und eine dementsprechend hohe Drehzahl des Unterflurhäckslers erforderlich, was wiederum hohen Energieaufwand erfordert.

Eine Aufgabe der Erfindung ist, einen Erntevorsatz zu schaffen, der eine zur Unterdrückung von Schädlingsbefall ausreichende Zerstörung der Struktur von abgestreiften Halmen bei geringem Energieeinsatz ermöglicht.

Die Aufgabe wird gelöst, indem bei einem Erntevorsatz für eine selbstfahrende Erntemaschine, insbesondere für die Ernte von Halmfrüchten, mit wenigstens einem in einer Fahrtrichtung der Erntemaschine langgestreckten Einzugsspalt und einem Paar von Pflückwalzen, das einen sich entlang des Einzugsspalts erstreckenden Klemmspalt bildet und drehangetrieben ist, um einen in dem Klemmspalt geklemmten Halm durch den Einzugsspalt quer zu dessen Längsrichtung hindurchzuziehen, jede Pflückwalze des Paars eine Mehrzahl von an ihrem Umfang verteilten Mitnehmerrippen aufweist, und wenigstens eine erste der Mitnehmerrippen einen gezahnten ersten Abschnitt und einen als durchgehende Schneidkante ausgebildeten zweiten Abschnitt aufweist. Die Zahnung erleichtert es der Mitnehmerrippe, sich während des Durchgangs des Halms durch den Klemmspalt in den Halm einzudrücken und so durch Aufreißen von dessen Außenhaut eine zügige Verrottung des Marks zu ermöglichen, so dass dieses als Unterschlupf für Schädlinge ungeeignet wird. Wenigstens eine zweite der Mitnehmerrippen weist eine durchgehende Schneidkante auf, die wenigstens mit dem ersten Abschnitt, vorzugsweise auch mit dem zweiten, axial überlappt, um den Halm zumindest so stark zu knicken, eventuell auch anzuschneiden, dass dadurch eine Längswanderung von Schädlingen im Halm in Längsrichtung unterbunden und der Halm in Abschnitte unterteilt wird, die zu kurz sind, um einen Schädling über Winter beherbergen zu können. Da somit die Pflückwalzen die Struktur des Halms sowohl im Querschnitt als auch in der Längsrichtung zerstören, kann auf einen den Pflückwalzen nachgeschalteten Unterflurhäcksler verzichtet werden.

Um eine rationale Fertigung zu ermöglichen, können beide Pflückwalzen formgleich sein.

Der gezahnte erste Abschnitt kann sich über mindestens die Hälfte der Länge der Pflückwalzen, vorzugsweise über ca. zwei Drittel ihrer Länge, erstrecken.

Um eine weitgehende Durchtrennung des Halms bereits durch die zusammenwirkenden gezahnten Abschnitte der beiden Pflückwalzen zu erreichen, sollten die gezahnten Abschnitte einander so gegenüberliegen, dass jeweils ein Zahn des gezahnten ersten Abschnitts einer der Pflückwalzen mit einem Zahnzwischenraum des gezahnten ersten Abschnitts der anderen Pflückwalze axial überlappt.

Die Pflückwalzen können jeweils einteilig gegossen sein, so dass alle Mitnehmerrippen einer Pflückwalze einteilig zusammenhängen. Einer in Fertigung und Betrieb kostengünstigeren Ausgestaltung zufolge weist jede Pflückwalze einen Walzenkern und wenigstens eine Leiste auf, die am Umfang des Walzenkerns austauschbar befestigt ist und wenigstens eine der Mitnehmerrippen bildet.

Die ersten Leisten jeder Pflückwalze sind vorzugsweise untereinander und/oder mit einer ersten Leiste der jeweils anderen Pflückwalze formgleich oder wenigstens querschnittsgleich. So können zum einen die ersten Leisten kostengünstig bereitgestellt werden, zum anderen erleichtert ihre Formgleichheit den Zusammenbau der Pflückwalzen.

Die wenigstens eine Leiste kann mehrere erste Leisten umfassen, die über den Umfang des Walzenkerns verteilt, vorzugsweise gleichmäßig verteilt, sind und von denen jede wenigstens eine der mehreren ersten Mitnehmerrippen bildet.

Des Weiteren kann die wenigstens eine Leiste wenigstens eine erste Leiste mit einem am Umfang des Walzenkerns austauschbar befestigten Basisabschnitt aufweisen, und beiderseits des Basisabschnitts abgewinkelte Abschnitte der ersten Leiste können zwei der ersten Mitnehmerrippen bilden. Dass so auf jede erste Leiste zwei Mitnehmerrippen kommen, trägt ebenfalls zu einem effizienten Zusammenbau der Pflückwalzen bei.

Die zweite Leiste kann wiederum einen am Basisabschnitt der ersten Leiste austauschbar befestigten Basisabschnitt und einen an einer Seite des Basisabschnitts abgewinkelten Abschnitt umfassen, der die wenigstens eine zweite Mitnehmerrippe bildet. Insbesondere kann sich jeweils eine gleiche Schraube durch Löcher der Basisabschnitte von zweiter und erster Leiste in den Walzenkern erstrecken, so dass erste und zweite Leisten in einem Arbeitsgang am Walzenkern festgeschraubt werden können.

Wenn die ersten Mitnehmerrippen sich jeweils im Querschnitt geradlinig radial nach außen erstrecken, können ein oder zwei erste Mitnehmerrippen an einer ersten Leiste in einem einzelnen Biegevorgang geformt werden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Erntevorsatzes, montiert an einem Mähdrescher;
- Fig. 2: eine Draufsicht auf den Erntevorsatz;
- Fig. 3: eine perspektivische Ansicht eines Gutannahmebereichs zwischen zwei Führungshauben und eines an den Gutannahmebereich anschließenden Einzugsspalts;
- Fig. 4: ein Paar Pflückwalzen in perspektivischer Ansicht; und
- Fig. 5: die Pflückwalzen der Fig. 4 im Schnitt in verschiedenen Phasen ihrer Drehung.

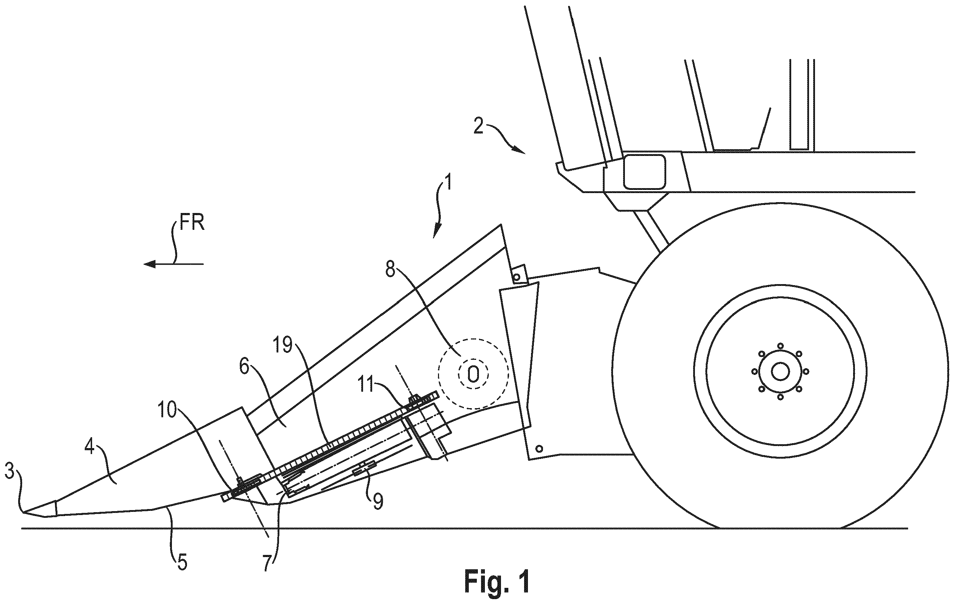

Fig. 1 zeigt schematisch einen erfindungsgemäßen Erntevorsatz 1 zum Ernten von Halmfrüchten, der in seinem rückwärtigen Bereich an einem nicht näher dargestellten Trägerfahrzeug 2, vorzugsweise einem Mähdrescher oder Häcksler adaptiert ist. Entlang einer Vorderkante des Erntevorsatzes 1 ist eine Reihe von sich jeweils von einer vorderen Spitze 3 aus nah hinten ähnlich einem halben Kegel verbreiternden Führungshauben 4 angeordnet. Seitliche Flanken 5 von zwei benachbarten Führungshauben 4 laufen jeweils nach hinten aufeinander zu, um in einen Gutannahmebereich zwischen den Führungshauben 4 einrückende Halme, wenn nötig, seitwärts zu verschieben und so einem an den Gutannahmebereich entgegen der Fahrtrichtung FR anschließenden Einzugsspalt zuzuführen. Der Einzugsspalt ist beiderseits von Gehäuseplatten 6 begrenzt. Unter den Gehäuseplatten 6 erstrecken sich beiderseits des Einzugsspalts ein- oder mehrteilig ausgeführte zylindrische oder konische Pflückwalzen 7, die an ihrem Umfang Profilsegmente wie etwa in axialer Richtung der Pflückwalzen 7 langgestreckte Rippen tragen und gegenläufig angetrieben sind, um einen in den Einzugsspalt an dessen vorderem Ende eingetretenen Halm einzuklemmen, durch den Einzugsspalt nach unten zu ziehen und so dessen Fruchtstände an Längskanten des Einzugsspalts abzustreifen. Eine sich in Fahrtrichtung FR hinter den Gehäuseplatten 6 angeordnete Förderschnecke 8 mit quer zur Fahrtrichtung FR orientierter Drehachse sammelt die Fruchtstände und führt sie den Trägerfahrzeug 2 zur weiteren Verarbeitung zu.

Indem im Laufe der Drehung der Pflückwalzen 7 Rippen der einen Pflückwalze 7 zwischen zwei benachbarte Rippen der anderen Pflückwalze 7 eingreifen, wird der Halm gequetscht und vielfach geknickt, je nach Ausgestaltung der Rippen eventuell auch angeschnitten, bleibt aber als solcher einstückig erhalten. Unter den Pflückwalzen 7 kann ein Häckselwerk 9 vorgesehen sein, um den Halm zu häckseln und das resultierende Häckselgut unter dem Erntevorsatz 1 zu verstreuen. Das Häckselwerk 9 kann ein oder mehrere mit Messern besetzte Rotoren umfassen, die um jeweils eine in einer vertikalen Ebene senkrecht zur Längsrichtung des Einzugsspalts 14 verlaufende Achse rotieren. Bevorzugtermaßen ist jedoch die Zerstörung der Halmstruktur durch die Pflückwalzen 7 bereits ausreichend, um eine zügige Verrottung auf dem Feld zu gewährleisten, so dass das Häckselwerk 9 ersatzlos entfallen kann.

Fig. 1 zeigt schematisch vordere und hintere Umlenkrollen 10, 11, die zwischen sich eine endlose Förderkette 19 aufgespannt halten. Ein solches Paar von Umlenkrollen 10, 11 und die daran umlaufende Förderkette sind unter jeder der beiden den Einzugspalt begrenzenden Gehäuseplatten 6 vorgesehen. Die beiden Förderketten tragen jeweils eine Mehrzahl von Fingern, die von der Seite her in den Einzugsspalt hinein vorspringen, um Halme, die in dem Einzugsspalt stecken, zu fassen und nach hinten, zur Förderschnecke 8, zu schieben. So wandern die Halme, während sie von den Pflückwalzen 7 nach unten gezogen werden, gleichzeitig entlang des Einzugsspalts nach hinten.

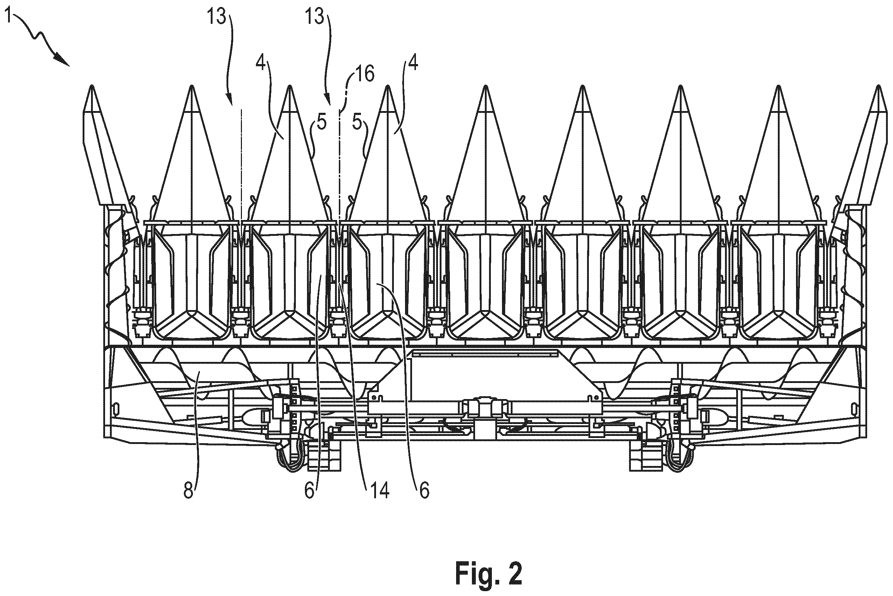

Fig. 2 zeigt eine Draufsicht auf den Erntevorsatz 1, in dem die oben erwähnten Gutannahmebereiche und Einzugsspalte, hier mit 13 bzw. 14 bezeichnet, sichtbar sind. Die zwei einen Gutannahmebereich 13 begrenzenden Flanken 5 von Führungshauben 4 verlaufen geradlinig und schräg zur Fahrtrichtung bis zu einem Eingang eines Einzugsspalts 14. Halme, die im Laufe der Vorwärtsbewegung des Trägerfahrzeugs 2 an eine Flanke 5 angestoßen und in Kontakt mit dieser seitwärts gebogen worden sind, werden bei Erreichen des Eingangs von an den Förderketten 20 umlaufenden Fingern erfasst und in den Einzugsspalt 14 eingezogen.

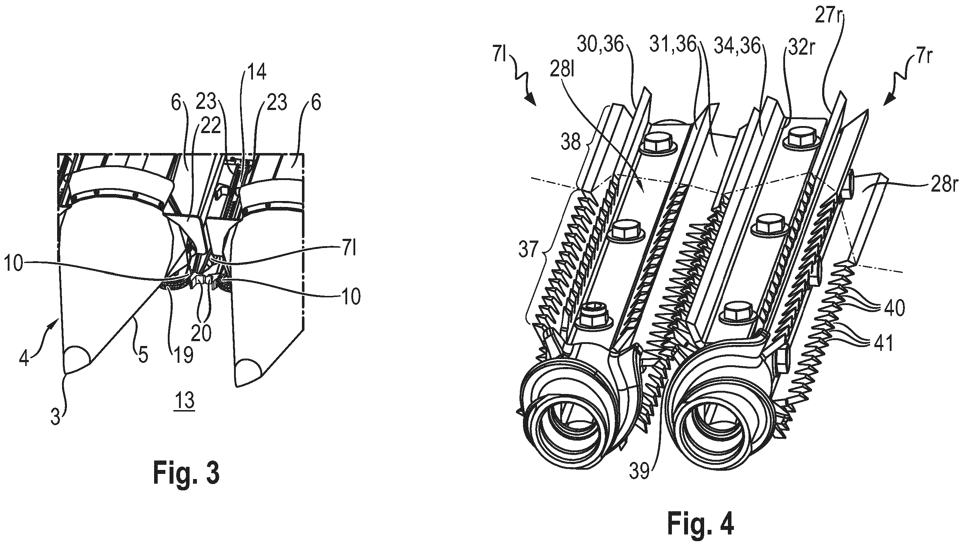

Unter den Basisabschnitten 17 der beiden in Fig. 3 gezeigten Führungshauben 4 ist in Fig. 3 ein jeweils freiliegendes Stück der vorderen Umlenkrolle 10 und der darum geschlungenen Förderkette, mit 19 bezeichnet, zu erkennen. Die Finger 20, die die Halme in den Einzugsspalt 14 hineinziehen und entlang des Einzugsspalts 14 verschieben, sind in gleichmäßigen Abständen an Gliedern der Förderketten 19 angeordnet. Die Bewegung der sich beiderseits des Einzugsspalts 14 gegenüberliegenden Förderketten 19 ist so synchronisiert, dass am Eingang des Einzugsspalts 14 Finger 20 der beiden Ketten 19 aufeinandertreffen und, indem sie gemeinsam entlang des Einzugsspalts 14 bewegt werden, die Halme entlang des Einzugsspalts 14 durchschieben.

Den Eingang zum Einzugsspalt 14 scheinbar verengende Platten sind biegsame Lappen 22 aus Gummi, die in Kontakt mit den von den Fingern 20 angetriebenen Halmen nachgeben; sie verhindern, dass von den Halmen während des Durchgangs durch den Einzugsspalt 14 abgestreifte Fruchtstände nach vorn herausfallen.

Die Gehäuseplatten 6 sind zum Einzugsspalt 14 hin abschüssig, so dass die abgestreiften Fruchtstände mit den entlang des Einzugsspalts 14 geförderten Halmen in Kontakt bleiben und von diesen in Richtung der Förderschnecke 8 mitgenommen werden. Kanten der Gehäuseplatten 6 können als Längskanten des Einzugsspalts 14 fungieren, an denen die Fruchtstände von den durchlaufenden Halmen abgestreift werden. Vorzugsweise sind Längskanten 23 des Einzugsspalts 14 durch Platten 24 gebildet, die sich in einer Ebene zwischen den Förderketten 19 und den (in Fig. 3 durch die Platten 24 verdeckten) Pflückwalzen 7 erstrecken, so dass abgestreifte Fruchtstände unmittelbar von den Fingern 20 erfasst und zur Förderschnecke 8 geschoben werden können.

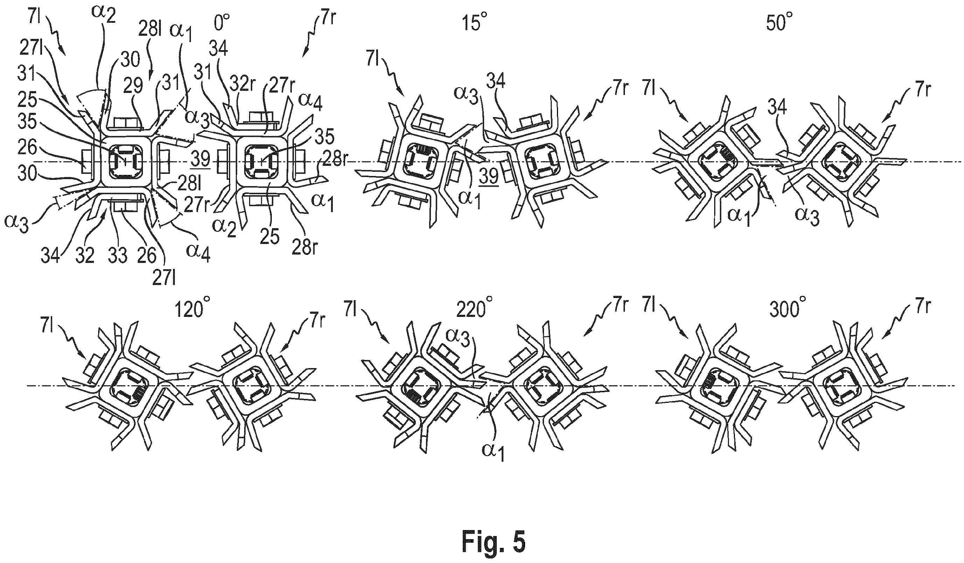

Fig. 4 zeigt ein Paar von Pflückwalzen 7, zur einfacheren Unterscheidung mit 7l, 7r bezeichnet, in einer perspektivischen Ansicht schräg von vorn, und Fig. 5 zeigt dasselbe Paar von Pflückwalzen 7l, 7r in verschiedenen Phasen seiner Drehung im axialen Schnitt. Ein rohrförmiger Walzenkern 25 (s. Fig. 5) der Pflückwalzen 7l, 7r hat einen vieleckigen oder an mehreren Stellen seines Umfangs abgeflachten Querschnitt, wobei die Zahl n der Seiten des Vielecks oder abgeflachten Stellen der Zahl von an dem Walzenkern 25 mittels Schrauben 26 befestigten ersten Leisten 27l, 27r, 28l, 28r entspricht. Die Zahl n kann eine kleine ganze Zahl sein, bevorzugtermaßen und wie in den Figuren gezeigt, ist n = 4.

Die ersten Leisten 27l, 27r, 28l, 28r sind jeweils durch Biegen eines Flachmaterialstreifens erhalten; um die gezeigte Form mit einem ebenen Basisabschnitt 29 und beiderseits des Basisabschnitts 29 geradlinig abgewinkelten Abschnitten 30, 31 zu formen, genügt es, den Flachmaterialstreifen mit einem an dem Basisabschnitt 29 anliegenden Stempel in ein rinnenförmiges Gesenk hineinzupressen.

Wenn die ersten Leisten 27l, 27r, 28l, 28r an den Pflückwalzen 7l, 7r montiert sind, fungieren ihre abgewinkelten Abschnitte 30, 31 als Mitnehmerrippen 36, die von entgegengesetzten Seiten her an in dem Einzugsspalt 14 gehaltenen Halmen angreifen, um sie durch den Einzugsspalt 14 hindurchzuziehen, sie dabei vielfach zu knicken und zumindest in ihrem unteren, stärkeren Teil aufzureißen.

Die Winkel zwischen dem Basisabschnitt 29 und den abgewinkelten Abschnitten 30, 31 sind bei den Leisten 27l, 27r und 28l, 28r jeweils unterschiedlich. Während bei den Leisten 27l, 27r beide Abschnitte 30, 31 gegen den Basisabschnitt um jeweils weniger als 90° abgewinkelt sind, ist der Winkel beim Abschnitt 30 der Leisten 28l, 28r größer als 90°. Infolgedessen sind an allen Stellen des Umfangs der Walzen 7l, 7r, an denen sich abgewinkelte Abschnitte verschiedener Leisten 27l, 28l oder 27r, 28r gegenüberliegen, die von ihnen aufgespannten Winkel α₁, ..., αₙ unterschiedlich groß und unterschiedlich orientiert.

Eine zweite Leiste 32l, 32r hat jeweils einen Basisabschnitt 33 und nur an einer Seite des Basisabschnitts 33 einen abgewinkelten Abschnitt 34, der als eine weitere Mitnehmerrippe 36 fungiert. Die zweite Leiste 32l, 32r ist in einer von einer der ersten Leisten 27l, 27r gebildeten Rinne mit Hilfe von Schrauben 26 befestigt, die sich durch jeweils überlappende Löcher der Basisabschnitte 33, 29 der beiden Leisten erstrecken und in Gewinde des Walzenkerns 25 eingreifen. Die erste Leiste 27l, 27r, die die zweite Leiste 32l, 32r aufnimmt, ist jeweils so gewählt, dass der abgewinkelte Abschnitt 34 dem kleinsten der Winkel α₁, ..., αₙ benachbart ist.

In der in Fig. 5 mit 0° bezeichneten Orientierung kann die Gestalt der Pflückwalze 7r von der Pflückwalze 7l durch Spiegeln an einer durch Drehachsen 35 der beiden Pflückwalzen 7l, 7r verlaufenden Ebene abgeleitet werden.

Wie in Fig. 4 zu erkennen, sind die Mitnehmerrippen 36 jeweils längs unterteilt in einen vorderen, d.h. dem Gutannahmebereich 13 zugewandten, gezahnten ersten Abschnitt 37 und einen hinteren, als gerade Schneidkante ausgebildeten Abschnitt 38. Die Zähne 40 können unter geringerem Kraftaufwand in einen den Klemmspalt 39 durchlaufenden Halm eindringen als eine gerade Klinge, was insbesondere in einem vorderen Bereich der Pflückwalzen 7l, 7r von Vorteil ist, der mit einem unteren, relativ kräftigen Teil der Halme wechselwirkt.

Die gezahnten vorderen Abschnitte 37 nehmen etwa zwei Drittel der Länge der Leisten 27l, 27r, 28l, 28r ein.

Zähne 40 der vorderen Abschnitte 37 sind jeweils so angeordnet, dass beim Durchgang durch einen Klemmspalt 39 zwischen den beiden Pflückwalzen 7l, 7r Zähne 39 der einen Pflückwalze 7l oder 7r Zahnwischenräumen 41 der anderen Pflückwalze gegenüberliegen. So kann sichergestellt werden, dass Zähne 40 der beiden Pflückwalzen 7l, 7r in einen durch den Klemmspalt 39 hindurchgezogenen Halm an jeweils axial gegeneinander versetzten Stellen eindringen und in einer energiesparenden Bewegung in Längsrichtung ihrer Schneidkanten auf einem Großteil seines Querschnitts durchtrennen, anstatt quer zu ihren Schneidkanten in den Halm hineingepresst zu werden und ihn dabei mit hohem Kraftaufwand zu quetschen.

Die geradkantigen, hinteren Abschnitte 38 wirken im Betrieb jeweils mit oberen Abschnitten der Halme zusammen, die schlanker sind als die unteren und deshalb gezahnte Abschnitte eventuell weitgehend unversehrt durchlaufen könnten, von den geradkantigen Abschnitten 38 aber zuverlässig angeschnitten werden.

Der abgewinkelte Abschnitt 34 der zweiten Leisten 32l und 32r ist als Mitnehmerrippe mit einer geradlinigen Schneidkante ausgebildet, die sich über die gesamte Länge der Leisten 27, 28, 32 erstreckt.

Wie in den Konfigurationen 0°, 15° und 50° der Fig. 5 zu erkennen, ist der abgewinkelte Abschnitt 34 der Pflückwalze 7r benachbart zu deren kleinstem Winkel α₃ so angeordnet, dass beim Durchgang durch den Klemmspalt 39 zunächst beide den Winkel α₃ begrenzenden abgewinkelten Abschnitte der Pflückwalze 7r gleichzeitig in den größten Winkel α₁ an der Pflückwalze 7l eingreifen und anschließend der Abschnitt 31 des Winkels α₁ zwischen den Abschnitt 31 des Winkels α₃ und den Abschnitt 34 eingreift. Indem so ein Halm auf geringer Länge mehrfach in entgegengesetzte Richtungen geknickt wird und Kontakt mit Abschnitten beider Pflückwalzen 7l, 7r den Klemmspalt 39 durchläuft, kann eine hohe Zugkraft auf den Halm ausgeübt werden.

Wie in der 120°-Konfiguration zu erkennen, durchlaufen die Abschnitte, die die Winkel α₂ der Pflückwalze 7l und α₄ der Pflückwalze 7r begrenzen, jeweils leicht gegeneinander versetzt, so dass sie zwar jeweils gleichzeitig von verschiedenen Seiten her einen den Klemmspalt 39 durchlaufenden Halm anschneiden und/oder knicken, ihn aber nicht vollständig durchtrennen.

Nach einer halben Umdrehung vertauschen sich die Rollen der beiden Pflückwalzen: wie in der 220°-Konfiguration zu erkennen, ist es nun die zweite Leiste 32l der Pflückleiste 7l, die mit den den Winkel α₁ begrenzenden abgewinkelten Abschnitten der Pflückwalze 7r zusammenwirkt.

Da die gezahnten Abschnitte 37 sich jeweils nur über einen vorderen Teil der Leisten 27l, 27r, 28l, 28r erstrecken, sind die Leisten 27l und 27r (und 28l, 28r) trotz ihrer zueinander spiegelbildlichen Querschnitte nicht formgleich.

### Bezugszeichen

- 1: Erntevorsatz
- 2: Trägerfahrzeug
- 3: Spitze
- 4: Führungshaube
- 5: Flanke
- 6: Gehäuseplatte
- 7 l,r: Pflückwalze
- 8: Förderschnecke
- 9: Häckselwerk
- 10: vordere Umlenkrolle
- 11: hintere Umlenkrolle
- 13: Gutannahmebereich
- 14: Einzugsspalt
- 19: Förderkette
- 20: Finger
- 22: Lappen
- 23: Längskante
- 24: Platte
- 25: Walzenkern
- 26: Schraube
- 27 l,r: erste Leiste
- 28 l,r: erste Leiste
- 29: Basisabschnitt
- 30: abgewinkelter Abschnitt
- 31: abgewinkelter Abschnitt
- 32 l,r: zweite Leiste
- 33: Basisabschnitt
- 34: abgewinkelter Abschnitt
- 35: Drehachse
- 36: Mitnehmerrippe
- 37: vorderer Abschnitt
- 38: hinterer Abschnitt
- 39: Klemmspalt
- 40: Zahn
- 41: Zahnzwischenraum

## Patentansprüche

1. Erntevorsatz (1) für eine selbstfahrende Erntemaschine, insbesondere für die Ernte von Halmfrüchten, mit wenigstens einem in einer Fahrtrichtung der Erntemaschine (1) langgestreckten Einzugsspalt (14) und einem Paar von Pflückwalzen (7; 7l, 7r), das einen sich entlang des Einzugsspalts (14) erstreckenden Klemmspalt (39) bildet und drehangetrieben ist, um einen in dem Klemmspalt (39) geklemmten Halm durch den Einzugsspalt (14) quer zu dessen Längsrichtung hindurchzuziehen, wobei jede Pflückwalze (7; 7l, 7r) des Paars eine Mehrzahl von an ihrem Umfang verteilten Mitnehmerrippen (36) aufweist, **dadurch gekennzeichnet, dass** wenigstens eine erste der Mitnehmerrippen (36) einen gezahnten ersten Abschnitt (37) und einen als durchgehende Schneidkante ausgebildeten zweiten Abschnitt (38) aufweist und wenigstens eine zweite der Mitnehmerrippen (36) eine durchgehende Schneidkante aufweist, die wenigstens mit dem ersten Abschnitt (37) axial überlappt.

2. Erntevorsatz nach Anspruch 1, **dadurch gekennzeichnet, dass** beide Pflückwalzen formgleich sind.

3. Erntevorsatz nach Anspruch 1 oder 2, **dadurch gekennzeichnet, dass** der erste Abschnitt (37) sich über mindestens die Hälfte der Länge der Pflückwalzen (7) oder ihrer Mitnehmerrippen (36) erstreckt.

4. Erntevorsatz nach einem der vorhergehenden Ansprüche, **dadurch gekennzeichnet, dass** jeweils ein Zahn (40) des gezahnten ersten Abschnitts (37) einer der Pflückwalzen (7l) mit einem Zahnzwischenraum (41) des gezahnten ersten Abschnitts (37) der anderen Pflückwalze (7r) axial überlappt.

5. Erntevorsatz nach einem der vorhergehenden Ansprüche, **dadurch gekennzeichnet, dass** jede Pflückwalze (7l, 7r) einen Walzenkern (25) und wenigstens eine Leiste (27l, 27r, 28l, 28r; 32l, 32r) aufweist, die am Umfang des Walzenkerns (25) austauschbar befestigt ist und wenigstens eine der Mitnehmerrippen (36) bildet.

6. Erntevorsatz nach Anspruch 5, **dadurch gekennzeichnet, dass** die wenigstens eine Leiste (27l, 27r, 28l, 28r; 32l, 32r) mehrere erste Leisten (27l, 27r, 28l, 28r) umfasst, die über den Umfang des Walzenkerns (25) verteilt sind und von denen jede wenigstens eine der mehreren ersten Mitnehmerrippen (36) bildet, wobei optional die ersten Leisten (27l, 27r, 28l, 28r) jeder Pflückwalze (7l, 7r) untereinander und/oder mit einer ersten Leiste der jeweils anderen Pflückwalze (7r, 7l) formgleich oder wenigstens querschnittsgleich sind.

7. Erntevorsatz nach Anspruch 5 oder 6, **dadurch gekennzeichnet, dass** die wenigstens eine Leiste wenigstens eine erste Leiste (27l, 27r, 28l, 28r) umfasst, wobei die erste Leiste (27l, 27r, 28l, 28r) einen am Umfang des Walzenkerns (25) austauschbar befestigten Basisabschnitt (29) aufweist und beiderseits des Basisabschnitts (29) abgewinkelte Abschnitte (30, 31) der ersten Leiste (27l, 27r, 28l, 28r) zwei der ersten Mitnehmerrippen (36) bilden.

8. Erntevorsatz nach Anspruch 7, **dadurch gekennzeichnet, dass** die wenigstens eine Leiste ferner eine zweite Leiste (32l, 32r) umfasst, wobei die zweite Leiste (32l, 32r) einen am Basisabschnitt (29) der ersten Leiste (27l, 27r) austauschbar befestigten Basisabschnitt (33) und einen an einer Seite des Basisabschnitts (33) abgewinkelten Abschnitt (34) umfasst, der die wenigstens eine zweite Mitnehmerrippe (36) bildet.

9. Erntevorsatz nach Anspruch 6, 7 oder 8, **dadurch gekennzeichnet, dass** die ersten Mitnehmerrippen (36) sich jeweils im Querschnitt geradlinig radial nach außen erstrecken.
